# EUROPEAN PATENT SPECIFICATION

(11) **EP 3 840 175 B1**
(45) Date of publication and mention of the grant of the patent: **28.10.2026**
(21) Application number: 20214447.3
(22) Date of filing: 16.12.2020
(51) Int. Cl.: H02J 50/40, H02J 50/20, H02J 50/90, H02J 50/80

(54) **METHODS AND SYSTEMS FOR WIRELESS POWER TRANSFER**
VERFAHREN UND SYSTEME ZUR DRAHTLOSEN LEISTUNGSÜBERTRAGUNG
PROCÉDÉS ET SYSTÈMES DE TRANSFERT DE PUISSANCE SANS FIL

(30) Priority: 20.12.2019 DE 102019220462
(43) Date of publication of application: 23.06.2021
(73) Proprietor: AIRBUS S.A.S., 31700 Blagnac Cedex (FR)
(72) Inventor: Schleicher, Bernd, 82024 Taufkirchen (DE); Schupke, Dominic, 82024 Taufkirchen (DE); Baltaci, Aygün, 82024 Taufkirchen (DE); DREXLER, Andreas, 82024 Taufkirchen (DE); Duhovnikov, Svetoslav, 82024 Taufkirchen (DE); TEPPER, Jan, 82024 Taufkirchen (DE)
(74) Representative: Isarpatent

(56) References cited:
- EP-A1- 3 148 052
- US-A1- 2019 178 924
- US-A1- 2019 280 532
- US-A1- 2019 308 514
- US-B1- 10 333 357

## Description

### FIELD OF THE INVENTION

The present invention pertains to methods and systems for wireless power transfer, particularly for use in providing power to wireless components of wireless networks.

### BACKGROUND OF THE INVENTION

Aircraft design, production and maintenance involves the challenge of cabling. Copper wires and connectors significantly contribute to an aircraft's weight which is undesirable when trying to reduce fuel consumption and emission of greenhouse gases.

Wireless communications can be used to replace on-board cables of some communication sensors via exploiting short-distance radio communications to transfer data between sensors or actuators. This improves operating and maintenance. There are different categories for wireless connected sensor applications that depend on data rate and location of the sensor within the aircraft. Each of those categories contains a number of sensors on board of an aircraft which must be equipped with wireless capability. Those sensors transmit observational sensor data to gateways on board over wireless channels so that the aircraft may be efficiently and reliably operated without having to rely on extensive cabling.

The components of these wireless environments, such as sensors and other network nodes, require power to operate. Such powering is usually still reliant on employment of batteries or accumulators or wirebound power lines connecting the components to an on-board energy supply.

To overcome the challenges of powering the wireless components, wireless power transfer (WPT) is a promising technology. In WPT, power is transferred wirelessly over the air (OTA) to receiving components which convert the received power to direct current (DC) power via converters. The DC power can be used instantaneously or stored in capacitors to allow a duty cycle operation of the involved sensors.

Among the WPT transfer methods discussed, like e.g. ultra-sound, vibration, inductive/capacitive coupling, light/laser, thermal or other transfer methods, with all methods having it's pro's and con's, here radio frequency (RF) power transfer is used. Radio-frequency (RF) WPT is a widely adopted radiative method that utilizes radio signals at a given operational frequency and allowable transmit power and using well adopted components for establishing the RF WPT. Key component in the link is the RF-to-DC converter, which converts the received RF power signal into a DC power to completely operate the connected sensor from the acquired energy.

Document US 2018/0026481 A1 discloses WPT technologies based on power waveforming. Document DE 10 2016 221 474 A1 discloses an electric vehicle charging grid with multiple adjacent charging stations that are adaptively operated to mitigate electromagnetic interference between the charging stations. Document DE 10 2016 224 804 A1 discloses a method for determining the position of a charging station for the wireless transmission of electrical energy to a vehicle.

US 2019/280532 A1 discloses an electronic apparatus including a first transmitter configured to transmit a first wireless signal of power feeding, to a first terminal; a second transmitter configured to transmit a second wireless signal of power feeding to the first terminal and controlling circuitry configured to control both the first transmitter and the second transmitter to transmit simultaneously at least a part of the first wireless signal from the first transmitter to the first terminal and the second wireless signal from the second transmitter to the first terminal.

US 10,333,357 B1 discloses systems and methods for transmitting, receiving, and controlling wireless power. The systems include one or more transmitters, one or more receivers, one or more sensors, one or more surrounding mapping devices, one or more controllers and control methods, and/or one or several arrangements.

US 2019/178924 A1 discloses systems and methods for detecting low-loss eigenmodes of a spherical waveguide bounded by the Earth's surface and its ionosphere.

### SUMMARY OF THE INVENTION

The invention is defined by the independent claims. The dependent claims define advantageous embodiments.

It is one of the objects of the invention to find solutions for increasing the power transfer efficiency in wireless power transfer applications, specifically in remotely powering components of wireless networks inside aircraft.

According to a first aspect of the invention, a system for wireless power transfer (WPT) comprises a plurality of WPT transmission devices with at least pairwise overlapping power transmission coverage and at least one WPT receiver device configured to wirelessly receive power transmitted by the plurality of WPT transmission devices. The at least one WPT receiver device is arranged at a fixed position relative to the plurality of WPT transmission devices. The system further comprises a WPT transmit controller coupled to the plurality of WPT transmission devices. The WPT transmit controller is configured to control WPT transmission properties of the plurality of WPT transmission devices so that a transmit power level from the plurality of WPT transmission devices received at the fixed position of the at least one WPT receiver device lies within a predetermined power level range.

In some embodiments of the first aspect, a minimum power level threshold of the predetermined power level range may be determined by a minimum power level needed to sufficiently provide the at least one WPT receiver device with electric power. In some embodiments, a maximum power level threshold of the predetermined power level range may be determined by a maximum power level supported by the power supply specifications of the at least one WPT receiver device. This has the advantage that constructive and destructive interference patterns arising from flat-fading when operating multiple transmitters in a complex reflective environment may be avoided. Locally strong electric fields may be prevented from appearing at certain locations which would exceed an allowable range - a requirement specifically desirable in avionics settings. At the same time, all receiver devices are guaranteed to be supplied with a minimum power at all times in order to have sufficiently reliable uptime of the receiver devices.

In some embodiments of the first aspect, the plurality of WPT transmission devices may be configured to perform radiative radio frequency WPT. Radiative radio frequency (RF) WPT, i.e. far-field WPT based on omnidirectionally emitted electromagnetic radiation may be less efficient than directed radiative power transfer, but is sufficiently efficient on lower to medium distances. The benefits of Radiative RF WPT are less impact of attenuation and alignment issues on the actual power transfer function, thus increasing flexibility and simplicity of the WPT architecture.

According to the first aspect of the invention, the system comprises a retransmission receiver configured to relay information about the transmit power level received at the fixed position of the at least one WPT receiver device to the WPT transmit controller.

In some embodiments of the first aspect of the invention, the retransmission receiver is coupled to the WPT transmit controller, the retransmission receiver being configured to receive a transmit power level indication signal from the at least one WPT receiver device indicating the measured received power level at the position of the at least one WPT receiver device. In some embodiments thereof, the retransmission receiver may include a receive antenna configured to receive the transmit power level indication signal from the at least one WPT receiver device wirelessly. The WPT transmit controller may in some embodiments be configured to adjust the WPT transmission properties of the plurality of WPT transmission devices based on the received transmit power level indication signal from the at least one WPT receiver device. Such a retransmission receiver provides for an advantageous feedback loop from the receiver device so that the WPT transmit controller is able to dynamically optimize the WPT transmission properties based on real measurements of the actual power received at the receiver devices. The wireless properties of the retransmission equipment do not necessarily need to use the same parameters such as transmission frequency or bandwidth as the WPT transmission and receiver devices.

In some embodiments of the first aspect, the WPT transmission properties controlled by the WPT transmit controller may include one or more of individual phases of the radiated sinusoidal or multi-tone output signals of the plurality of WPT transmission devices, timing of the transmission during on/off time in duty-cycle operation of the plurality of WPT transmission devices, frequency spacing for spread-spectrum emission of the plurality of WPT transmission devices and variation of modulation schemes of the RF transmission of the plurality of WPT transmission devices.

According to a second aspect of the invention, a method for wireless power transfer (WPT) between a plurality of WPT transmission devices with at least pairwise overlapping power transmission coverage and at least one WPT receiver device configured to wirelessly receive power transmitted by the plurality of WPT transmission devices is disclosed. The method involves the steps of arranging the at least one WPT receiver device at a fixed position relative to the plurality of WPT transmission devices, and controlling, by a WPT transmit controller, WPT transmission properties of the plurality of WPT transmission devices so that a transmit power level from the plurality of WPT transmission device at the fixed position of the at least one WPT receiver device lies within a predetermined power level range.

According to the second aspect of the invention, the method further comprises relaying, by a retransmission receiver, information about the transmit power level received at the fixed position of the at least one WPT receiver device to the WPT transmit controller.

In some embodiments of the second aspect, a minimum power level threshold of the predetermined power level range may be determined by a minimum power level needed to sufficiently provide the at least one WPT receiver device with electric power. In some embodiments of the second aspect, a maximum power level threshold of the predetermined power level range may be determined by a maximum power level supported by the power supply specifications of the at least one WPT receiver device. This has the advantage that constructive and destructive interference patterns arising from flat-fading when operating multiple transmitters in a complex reflective environment may be avoided. Locally strong electric fields may be prevented from appearing at certain locations which would exceed an allowable range - a requirement specifically desirable in avionics settings. At the same time, all receiver devices are guaranteed to be supplied with a minimum power at all times in order to have sufficiently reliable uptime of the receiver devices.

In some embodiments of the second aspect, the plurality of WPT transmission devices may be configured to perform radiative radio frequency WPT. Radiative radio frequency (RF) WPT, i.e. far-field WPT based on omnidirectionally emitted electromagnetic radiation may be less efficient than directed radiative power transfer, but is sufficiently efficient on lower to medium distances. The benefits of Radiative RF WPT are less impact of attenuation and alignment issues on the actual power transfer function, thus increasing flexibility and simplicity of the WPT architecture.

In some embodiments of the second aspect, the method may further involve the step of receiving, by a retransmission receiver, a transmit power level indication signal from the at least one WPT receiver device indicating the measured received power level at the position of the at least one WPT receiver device. In some embodiments thereof, receiving the transmit power level indication signal from the at least one WPT receiver device may be performed wirelessly. Controlling the WPT transmission properties of the plurality of WPT transmission devices may in some cases include adjusting the WPT transmission properties of the plurality of WPT transmission devices based on the received transmit power level indication signal from the at least one WPT receiver device. Receiving transmit power level indication signals as feedback advantageously enables the adjustment of the WPT transmission properties to be dynamically optimized based on real measurements of the actual power received at the receiver devices.

In some embodiments of the second aspect, controlling the WPT transmission properties includes one or more of controlling individual phases of the radiated sinusoidal or multi-tone output signals of the plurality of WPT transmission devices, controlling timing of the transmission during on/off time in duty-cycle operation of the plurality of WPT transmission devices, controlling frequency spacing for spread-spectrum emission of the plurality of WPT transmission devices and controlling variation of modulation schemes of the RF transmission of the plurality of WPT transmission devices.

National regulation authorities typically allocate a radio frequency (RF) band to specific RF emission types. The system and method of the first and second aspect, respectively, have the advantage that specific regulation requirements like maximal transmit power, bandwidth, timing pattern, antenna beams, mitigation techniques and similar properties of WPT devices may be dynamically adjusted when the system is moved from one geographical location to another without having to resort to specifically tailored system solutions for each location. Specifically for WPT architectures on-board or aircraft this is very beneficial since aircraft regularly move from one geographical location to another.

According to the first aspect of the invention, the system comprises a geolocation or ground position device being configured to receive a geolocation or ground position indicating the geographical location of the system. According to the first aspect of the invention, the WPT transmit controller is configured to adjust the predetermined power level range depending on the geographical location of the system, and configured to adjust the WPT transmission properties of the plurality of WPT transmission devices depending on the relayed, by the retransmission receiver, information about the transmit power level received at the fixed position of the at least one WPT receiver device.

In some embodiments of the first aspect, the geolocation or ground position device may comprise a global navigation satellite system (GNSS) receiver coupled to the WPT transmit controller, and may be configured to receive the geolocation or ground position signal, in particular a positioning signal of a GNSS indicating the geographical location of the system for WPT. In some of those embodiments, the WPT transmit controller may be configured to adjust a maximum power level threshold at the fixed positions of the at least one WPT receiver device, the maximum power level threshold corresponding to a maximum power level allowed for the at least one WPT receiver device depending on the received geolocation or ground position signal.

According to the second aspect of the invention, the method includes receiving, by a geolocation or ground position device, a geolocation or ground position signal indicating the geographical location of the system. According to the second aspect of the invention, the method includes adjusting, by the WPT transmit controller, the predetermined power level range depending on the geographical location of the system and adjusting the WPT transmission properties of the plurality of WPT transmission devices depending on the relayed, by the retransmission receiver, information about the transmit power level received at the fixed position of the at least one WPT receiver device.

In some embodiments of the second aspect, controlling the WPT transmission properties of the plurality of WPT transmission devices includes adjusting a maximum power level threshold at the fixed position of the at least one WPT receiver device, the maximum power level threshold corresponding to a maximum power level allowed for the at least one WPT receiver device depending on the received geolocation or ground position signal.

The WPT transmission devices may advantageously be software programmable field devices that have a configuration memory for storing a plurality of predetermined configurations of operational parameters. Depending on the received GNSS positioning signal, the WPT transmit controller may selectively choose one of the pre-installed configurations to operate the WPT transmission devices. Thus, it can be advantageously ensured that a WPT system is globally enabled by changing the WPT transmission properties dynamically according to the current geolocation. Moreover, even if national regulations are updated or changed, the hardware of existing WPT systems may stay the same as only software updates for the pre-installed configurations sets need to be applied.

In some embodiments of the first and second aspect, the plurality of WPT transmission devices may be configured to perform radiative radio frequency WPT. Radiative radio frequency (RF) WPT, i.e. far-field WPT based on omnidirectionally emitted electromagnetic radiation may be less efficient than directed radiative power transfer, but is sufficiently efficient on lower to medium distances. The benefits of Radiative RF WPT are less impact of attenuation and alignment issues on the actual power transfer function, thus increasing flexibility and simplicity of the WPT architecture.

In some embodiments of the first and second aspect, the WPT transmission properties controlled by WPT transmit controller include one or more of individual phases of the radiated sinusoidal or multi-tone output signals of the plurality of WPT transmission devices, timing of the transmission during on/off time in duty-cycle operation of the plurality of WPT transmission devices, frequency spacing for spread-spectrum emission of the plurality of WPT transmission devices and variation of modulation schemes of the RF transmission of the plurality of WPT transmission devices.

According to a third aspect of the invention, an aircraft includes the system according to the first aspect. In some embodiments, at least one WPT receiver device comprises a sensor of a wireless communication network.

Wireless communication networks rely on a plurality of sensor and actuator units in an aircraft that benefit greatly from being powered wirelessly. One potential scenario is the powering of electronics in passenger seats inside an aircraft cabin. Wirelessly powering them allows re-arranging seats without having to re-arrange the wiring cables as well. This increases flexibility, maintainability and reduces installation costs. Moreover, a multitude of receiver devices may be powered simultaneously by only a few WPT transmitter devices within the whole cabin environment since sensors and actuators in a wireless communication network typically consume but little average power. Particularly advantageous is the wireless powering of receiver devices with duty-cycle operation, i.e. devices that are typically built to store electrically harvested energy in a storage capacitor and start their operation when a certain charging level is reached. Typical operational repetition rates are from few seconds to several minutes so that a small number of WPT transmitter devices can be responsible for powering a much larger number of such receiver devices with duty-cycle operation.

### BRIEF DESCRIPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
- Fig. 1: schematically illustrates a block diagram of an exemplary first system for wireless power transfer according to some embodiments of the invention;
- Fig. 2: schematically illustrates a block diagram of an exemplary second system for wireless power transfer according to some embodiments of the invention;
- Fig. 3: schematically illustrates a flow diagram of a method for wireless power transfer in the first system of Fig. 1 according to some embodiments of the invention;
- Fig. 4: schematically illustrates a flow diagram of a method for wireless power transfer in the second system of Fig. 2 according to some embodiments of the invention; and
- Fig. 5: schematically illustrates an aircraft having a system for wireless power transfer according to some embodiments of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

### DETAILED DESCRIPTION OF THE INVENTION

Although specific embodiments have been illustrated and described herein, it will be appreciated by those of ordinary skill in the art that a variety of alternate implementations may be substituted for the specific embodiments shown and described without departing from the scope of the present invention. Generally, this application is intended to cover any adaptations or variations of the specific embodiments discussed herein.

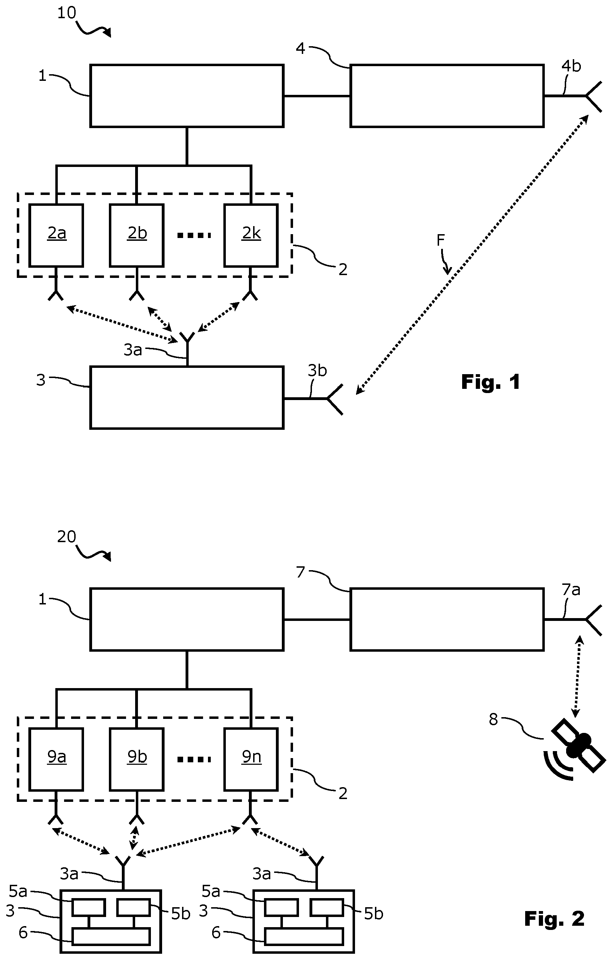

Figs. 1 and 2 disclose systems for wireless power transfer. While some features and elements of the systems are only shown in conjunction with one of the Figs. 1 and 2, it should be clear that features and elements of the system of Fig. 1 may be implemented in the system of Fig. 2 and vice versa.

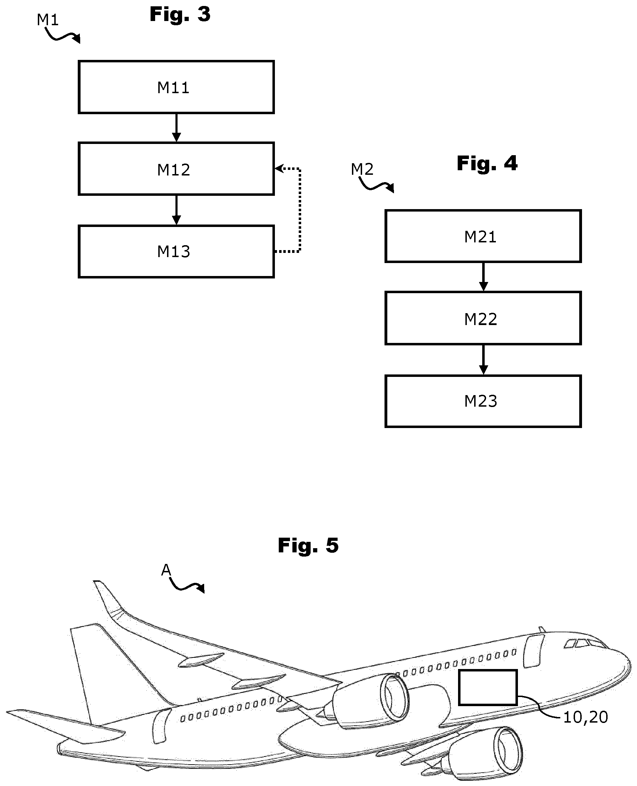

Fig. 1 discloses an exemplary configuration of a system 10 for wireless power transfer (WPT). The system 10 may for example be implemented in an aircraft such as the aircraft A as shown in Fig. 5. The system 10 may for example be implemented in a wireless avionics intra-communication (WAIC) network of an aircraft.

The system 10 includes a plurality of WPT transmission devices 2a, 2b to 2k with at least pairwise overlapping power transmission coverage. Although there are only three WPT transmission devices 2a, 2b to 2k explicitly shown in Fig. 1, it should be understood that any other number of WPT transmission devices may be equally possible. In particular, a system 10 may in reality include a lot more than just three WPT transmission devices 2a, 2b to 2k. The WPT transmission devices may be collectively referred to as WPT supply system 2. The WPT transmission devices 2a, 2b to 2k may be distributed over the WPT environment depending on the intended coverage of the system 10. The WPT transmission devices particularly support radiative radio frequency (RF) WPT, i.e. far-field omnidirectional radiative power transmission by electromagnetic waves. The WPT transmission devices 2a, 2b to 2k may be adjustable in their WPT transmission properties, for example in their individual phases of the radiated sinusoidal or multi-tone output signals, their timing of the transmission during on/off time in duty-cycle operation, their frequency spacing for spread-spectrum emission and/or their variation of modulation schemes of the RF transmission.

The system 10 includes at least one WPT receiver device 3 that is configured to wirelessly receive power transmitted by some or all of the plurality of WPT transmission devices 2a, 2b and 2k. Typically, the WPT receiver device 3 is arranged at a fixed position relative to each of the WPT transmission devices 2a to 2k in an environment such as an aircraft cabin. The WPT receiver device 3 includes a receive antenna 3a which is configured to harvest electrical energy received over-the-air (OTA) by respective antenna of the WPT transmission devices. The WPT receiver device 3 may be any remotely powered device such as a network component, a sensor or an actuator. The WPT receiver device 3 further includes (not explicitly shown) circuitry to convert the received wireless power to DC current and optional storage means like a rechargeable battery or a supercapacitor to at least temporarily store the harvested electrical energy.

The system 10 further includes a WPT transmit controller 1 that is coupled to each of the plurality of WPT transmission devices 2a, 2b, and 2k. The WPT transmit controller 1 is able to control the WPT transmission properties of each of the WPT transmission devices 2a, 2b, 2k. In particular, the WPT transmit controller 1 controls the WPT transmission properties in such a way that the transmit power levels at the fixed position of the WPT receiver device 3 lie within a predetermined power level range. Specifically, the WPT transmit controller 1 ensures by controlling the operational state of the WPT transmission devices that the available electrically harvestable transmission power at the fixed position does neither fall below a predefinable minimum power level nor exceed a maximum power level. For example, the minimum power level threshold may be determined by a minimum power level which is needed to sufficiently provide the WPT receiver device 3 with electric power for its intended functionality. The maximum power level threshold may be determined by a maximum power level that is supported by the power supply specifications of the WPT receiver device 3 or a maximum power level that is allowable under regulations for operating the WPT receiver device 3.

The system 10 further includes a retransmission receiver 4 that is coupled to the WPT transmit controller 1. The retransmission receiver 4 is equipped with a receive antennna 4b to which the WPT receiver device 3 may wirelessly send a transmit power level indication signal F via a transmission antenna 3b. The transmit power level indication signal F indicates the measured received power level at the position of the WPT receiver device 3. The retransmission receiver 4 relays the information about the received power level at the position of the WPT receiver device 3 to the WPT transmit controller 1 which in turn is able to adjust the WPT transmission properties of the WPT transmission devices 2a, 2b, 2k, taking into account the measured or detected received power level of the WPT receiver device 3. The WPT receiver device 3 may directly measure the power level or may indirectly detect the received power level on the basis of other parameters that have an influence on the received power level, for example by measuring the repetition rate of two or more re-transmissions.

If, for example, the measured received power level is deemed to be too high or too low or may be fluctuating too much, the WPT transmit controller 1 may alter the control of the WPT transmission properties of the WPT transmission devices individually or based on a common adjustment scheme. The success of such adjustment measures may be retrieved by way of the feedback loop over the WPT receiver device 3 and the retransmission receiver 4.

Fig. 2 discloses another exemplary configuration of a system 20 for wireless power transfer (WPT). The system 20 may for example be implemented in an aircraft such as the aircraft A as shown in Fig. 5. The system 20 may for example be implemented in a wireless avionics intra-communication (WAIC) network of an aircraft.

The system 20 includes at least one WPT transmission device 2 which may for example include multiple different transmission units 9a, 9b, 9n having different pre-set WPT transmission properties. Alternatively, the WPT transmission device 2 may be software programmable so that the WPT transmission properties of the WPT transmission device 2 may be adjusted by way of different adjustable sets of configuration for the WPT transmission device 2. Although there are only three different transmission units 9a, 9b, 9n explicitly shown in Fig. 2, it should be understood that any other number of transmission units may be equally possible. Moreover, the WPT transmission device 2 may include a (not explicitly shown) configuration storage in which different adjustable sets of configuration for the WPT transmission device 2 may be pre-installed.

The WPT transmission device 2 particularly supports radiative radio frequency (RF) WPT, i.e. far-field omnidirectional radiative power transmission by electromagnetic waves. The WPT transmission device 2 may be adjustable in its WPT transmission properties, for example in their individual phases of the radiated sinusoidal or multi-tone output signals, their timing of the transmission during on/off time in duty-cycle operation, their frequency spacing for spread-spectrum emission and/or their variation of modulation schemes of the RF transmission. It may also be possible for the different transmission units 9a, 9b, 9n to have respectively different WPT transmission properties.

The system 10 includes a number of WPT receiver devices 3 that are configured to wirelessly receive power transmitted by the at least one WPT transmission device. Typically, the WPT receiver devices 3 are each arranged at a fixed position relative to the WPT transmission device in an environment such as an aircraft cabin. The WPT receiver devices 3 each include a receive antenna 3a which is configured to harvest electrical energy received over-the-air (OTA) by respective antenna of the WPT transmission device 2. The WPT receiver devices 3 may be any remotely powered device such as a network component, a sensor or an actuator.

The WPT receiver devices 3 further include circuitry 5a, 5b to convert the received wireless power to DC current and optionally storage means like a rechargeable battery or a supercapacitor to at least temporarily store the harvested electrical energy. In particular, the WPT receiver devices 3 may include two or more different converter circuits for converting broadband RF to DC. A first RF-to-DC converter 5a may be able to receive emitted RF power with a first bandwidth, modulation and timing scheme and a second RF-to-DC converter 5b may be able to receive emitted RF power with a second bandwidth, modulation and timing scheme, which may be different from the first bandwidth, modulation and timing scheme of the first RF-to-DC converter 5a. The converters 5a and 5b are coupled in parallel to the processing circuitry 6 of the WPT receiver devices 3 so that either of the converters 5a and 5b may be selectively used to provide power to the processing circuitry 6, depending on the characteristics of the wirelessly received power at the antenna 3a.

The system 10 further includes a WPT transmit controller 1 that is coupled to the WPT transmission device 2. The WPT transmit controller 1 is able to control the WPT transmission properties of the WPT transmission device 2. In particular, the WPT transmit controller 1 controls the WPT transmission properties in such a way that the transmit power levels at the fixed position of the WPT receiver device 3 lie within a predetermined power level range that may vary depending on the geographical location of the system 20. Specifically, the WPT transmit controller 1 ensures by controlling the operational state of the WPT transmission device 2 that the available electrically harvestable transmission power at the fixed position does neither fall below a predefinable minimum power level nor exceed a maximum power level. For example, the minimum and maximum power level thresholds may depend on national regulations that apply in different countries or regions. By adjusting the minimum and maximum power level thresholds based on the geolocation of the system 20, the WPT transmit controller 1 is able to ensure full compliance with external regulations of the whole system 20 at all times.

The system 20 further includes a geolocation or ground position device 7, like for example a global navigation satellite system (GNSS) receiver 7 coupled to the WPT transmit controller 1, for example a Galileo receiver, a GPS receiver, a GLONASS receiver or a Beidou receiver. The GNSS receiver 7 is configured to receive a positioning signal of a GNSS 8 that indicates the current geographical location of the system 20. If another geolocation or ground position device 7 than a GNSS receiver 7 is used, it may be possible to receive another type of geolocation or ground position signal for indicating the current geographical location of the system 20. The WPT transmit controller 1 is configured to adjust a maximum power level threshold at each of the fixed positions of the plurality of WPT receiver devices 3. The maximum power level threshold may for example corresponding to a maximum power level allowed for the plurality of WPT receiver devices 3 depending on the received positioning signal of the GNSS 8.

Alternatively, it may also be possible to determine the geolocation of the system 20 by other means than a GNSS. For example, it may be possible for the system 20 to log onto a local or regional wireless RF network and determine geographical position from there.

Figs. 3 and 4 schematically illustrate flow diagrams of methods M1 and M2, respectively, for wireless power transfer (WPT) between WPT transmission devices and WPT receiver devices. The method M1 of Fig. 3 may for example be implemented using a system 10 as depicted and explained in conjunction with Fig. 1. The method M2 of Fig. 4 may for example be implemented using a system 20 as depicted and explained in conjunction with Fig. 2.

In a first step M11, the method M1 includes arranging a WPT receiver device 3 at a fixed position relative to each of the plurality of WPT transmission devices. A WPT transmit controller 1 is then used in a step M12 to control WPT transmission properties of each of the plurality of WPT transmission devices so that the transmit power levels from the WPT transmission devices at the fixed position of the at least one WPT receiver device 3 lie within a predetermined power level range. A minimum power level threshold of the predetermined power level range may be determined by a minimum power level needed to sufficiently provide the at least one WPT receiver device 3 with electric power. A maximum power level threshold of the predetermined power level range may be determined by a maximum power level supported by the power supply specifications of the at least one WPT receiver device 3.

In an optional third step M13, the method M13 may involve receiving, by a retransmission receiver 4, a transmit power level indication signal F from the at least one WPT receiver device 3, for example by wireless transmission. The transmit power level indication signal F indicates the measured received power level at the position of the at least one WPT receiver device 3. The WPT transmit controller 1 is then able to control the WPT transmission properties of each of the plurality of WPT transmission devices by adjusting their WPT transmission properties, depending on the measured power levels as indicated by the received transmit power level indication signal F. For example, the WPT transmit controller 1 may individually control the individual phases of the radiated sinusoidal or multi-tone output signals of the WPT transmission devices, the timing of the transmission during on/off time in duty-cycle operation of the WPT transmission devices, the frequency spacing for spread-spectrum emission of the WPT transmission devices or the variation of modulation schemes of the RF transmission of the WPT transmission devices.

The method M2 of Fig. 2 includes in a first step M21 an arranging of each of a plurality of WPT receiver devices 3 at a fixed position relative to at least one WPT transmission device 2. In a second step M22, the geographical location of the at least one WPT transmission device 2 is determined, for example by receiving a positioning signal of a global navigation satellite system GNSS 8 indicating the geographical location of the at least one WPT transmission device 2.

Finally, the WPT transmit controller 1 may control in a step M23 WPT transmission properties of at least one WPT transmission device 2 on the basis of the determined geographical location of the at least one WPT transmission device 2. For example, the WPT transmit controller 1 may receive the positioning signal of the GNSS 8 and may adjust a maximum power level threshold at each of the fixed positions of the plurality of WPT receiver devices 3. The maximum power level threshold may for example corresponding to a maximum power level allowed for the plurality of WPT receiver devices 3 depending on the determined geolocation of the WPT system.

For example, the WPT transmit controller 1 may individually control the individual phases of the radiated sinusoidal or multi-tone output signals of the WPT transmission device, the timing of the transmission during on/off time in duty-cycle operation of the WPT transmission device, the frequency spacing for spread-spectrum emission of the WPT transmission device or the variation of modulation schemes of the RF transmission of the WPT transmission device.

In the foregoing detailed description, various features are grouped together in one or more examples or examples with the purpose of streamlining the disclosure. It is to be understood that the above description is intended to be illustrative, and not restrictive. It is intended to cover all alternatives and modifications. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

## Claims

1. A system (10; 20) for wireless power transfer, WPT, comprising:
a plurality of WPT transmission devices (2a, ..., 2k; 9a, ..., 9n) with at least pairwise overlapping power transmission coverage;
at least one WPT receiver device (3) configured to wirelessly receive power transmitted by the plurality of WPT transmission devices (2a, ..., 2k; 9a, ..., 9n), the at least one WPT receiver device (3) being arranged at a fixed position relative to the plurality of WPT transmission devices (2a, ..., 2k; 9a, ..., 9n);
a WPT transmit controller (1) coupled to the plurality of WPT transmission devices (2a, ..., 2k; 9a, ..., 9n) and configured to control WPT transmission properties of the plurality of WPT transmission devices (2a, ..., 2k; 9a, ..., 9n) so that a transmit power level from the plurality of WPT transmission devices (2a, ..., 2k; 9a, ..., 9n) received at the fixed position of the at least one WPT receiver device (3) lies within a predetermined power level range;
a retransmission receiver (4) configured to relay information about the transmit power level received at the fixed position of the at least one WPT receiver device (3) to the WPT transmit controller (1); and
a geolocation or ground position device (7) configured to receive a geolocation or ground position signal indicating a geographical location of the system (10; 20);
wherein the WPT transmit controller (1) is configured to adjust the predetermined power level range depending on the geographical location of the system (10; 20), and configured to adjust the WPT transmission properties of the plurality of WPT transmission devices (2a, ..., 2k; 9a, ..., 9n) depending on the relayed, by the retransmission receiver (4), information about the transmit power level received at the fixed position of the at least one WPT receiver device (3).

2. The system (10; 20) of claim 1, wherein a minimum power level threshold of the predetermined power level range is determined by a minimum power level needed to sufficiently provide the at least one WPT receiver device (3) with electric power; and/or
wherein a maximum power level threshold of the predetermined power level range is determined by a maximum power level supported by the power supply specifications of the at least one WPT receiver device (3).

3. The system (10; 20) of one of the claims 1 or 2, wherein the plurality of WPT transmission devices (2a, ..., 2k; 9a, ..., 9n) is configured to perform radiative radio frequency, RF, WPT.

4. The system (10; 20) of one of the claims 1 to 3, wherein the retransmission receiver (4) is
coupled to the WPT transmit controller (1);
configured to receive a transmit power level indication signal (F) from the at least one WPT receiver device (3) indicating the measured or detected received power level at the position of the at least one WPT receiver device (3); and
includes a receive antenna (4b) configured to receive the transmit power level indication signal (F) from the at least one WPT receiver device (3) wirelessly.

5. The system (10; 20) of claim 4, wherein the WPT transmit controller (1) is configured to adjust the WPT transmission properties of the plurality of WPT transmission devices (2a, ..., 2k; 9a, ..., 9n) based on the received transmit power level indication signal (F) from the at least one WPT receiver device (3); and/or
wherein the WPT transmission properties controlled by the WPT transmit controller (1) include one or more of individual phases of the radiated sinusoidal or multi-tone output signals of the plurality of WPT transmission devices (2a, ..., 2k; 9a, ..., 9n), timing of the transmission during on/off time in duty-cycle operation of the plurality of WPT transmission devices (2a, ..., 2k; 9a, ..., 9n), frequency spacing for spread-spectrum emission of the plurality of WPT transmission devices (2a, ..., 2k; 9a, ..., 9n) and variation of modulation schemes of the RF transmission of the plurality of WPT transmission devices (2a, ..., 2k; 9a, ..., 9n).

6. The system (10; 20) of claim 1, wherein the geolocation or ground position device (7) comprises a global navigation satellite system, GNSS, receiver (7), coupled to the WPT transmit controller (1), and is configured to receive the geolocation or ground position signal, in particular a positioning signal of a GNSS (8) indicating the geographical location of the system (20) for WPT; and/or
wherein the WPT transmit controller (1) is configured to adjust a maximum power level threshold at the fixed position of the at least one WPT receiver device (3), the maximum power level threshold corresponding to a maximum power level allowed for the at least one WPT receiver device (3) depending on the received geolocation or ground position signal.

7. The system (10; 20) of claim 6, wherein the plurality of WPT transmission devices (2a, ..., 2k; 9a, ..., 9n) is configured to perform radiative radio frequency, RF, WPT; and/or
wherein the WPT transmission properties controlled by WPT transmit controller (1) include one or more of individual phases of the radiated sinusoidal or multi-tone output signals of the plurality of WPT transmission devices (2a, ..., 2k; 9a, ..., 9n), timing of the transmission during on/off time in duty-cycle operation of the plurality of WPT transmission devices (2a, ..., 2k; 9a, ..., 9n), frequency spacing for spread-spectrum emission of the plurality of WPT transmission devices (2a, ..., 2k; 9a, ..., 9n) and variation of modulation schemes of the RF transmission of the plurality of WPT transmission devices (2a, ..., 2k; 9a, ..., 9n).

8. A method (M1; M2) for wireless power transfer, WPT, between a plurality of WPT transmission devices (2a, ..., 2k; 9a, ..., 9n) with at least pairwise overlapping power transmission coverage and at least one WPT receiver device (3) configured to wirelessly receive power transmitted by the plurality of WPT transmission devices (2a, ..., 2k; 9a, ..., 9n), the method (M1; M2) comprising;
arranging (M11; M21) the at least one WPT receiver device (3) at a fixed position relative to the plurality of WPT transmission devices (2a, ..., 2k; 9a, ..., 9n); and
controlling (M12; M22), by a WPT transmit controller (1), WPT transmission properties of the plurality of WPT transmission devices (2a, ..., 2k; 9a, ..., 9n) so that a transmit power level from the plurality of WPT transmission devices (2a, ..., 2k; 9a, ..., 9n) at the fixed position of the at least one WPT receiver device (3) lies within a predetermined power level range;
relaying, by a retransmission receiver (4), information about the transmit power level received at the fixed position of the at least one WPT receiver device (3) to the WPT transmit controller (1);
receiving, by a geolocation or ground position device (7), a geolocation or ground position signal indicating a geographical location of the system (10; 20);
adjusting, by the WPT transmit controller (1), the predetermined power level range depending on the geographical location of the system (10; 20) and
adjusting the WPT transmission properties of the plurality of WPT transmission devices (2a, ..., 2k; 9a, ..., 9n) depending on the relayed, by the retransmission receiver (4), information about the transmit power level received at the fixed position of the at least one WPT receiver device (3).

9. The method (M1; M2) of claim 8, wherein a minimum power level threshold of the predetermined power level range is determined by a minimum power level needed to sufficiently provide the at least one WPT receiver device (3) with electric power; and/or
wherein a maximum power level threshold of the predetermined power level range is determined by a maximum power level supported by the power supply specifications of the at least one WPT receiver device (3).

10. The method (M1; M2) of one of claims 8 or 9, wherein the plurality of WPT transmission devices (2a, ..., 2k; 9a, ..., 9n) is configured to perform radiative radio frequency, RF, WPT; and/or further comprising:
receiving (M13; M23), by the retransmission receiver (4), a transmit power level indication signal (F) from the at least one WPT receiver device (3) indicating the measured or detected received power level at the position of the at least one WPT receiver device (3).

11. The method (M1; M2) of claim 10, wherein receiving (M13; M23) the transmit power level indication signal (F) from the at least one WPT receiver device (3) is performed wirelessly; and/or
wherein controlling (M12; M22) the WPT transmission properties of the plurality of WPT transmission devices (2a, ..., 2k; 9a, ..., 9n) includes adjusting the WPT transmission properties of the plurality of WPT transmission devices (2a, ..., 2k; 9a, ..., 9n) based on the received transmit power level indication signal (F) from the at least one WPT receiver device (3).

12. The method (M1; M2) of one of the claims 8 to 10, wherein controlling (M12; M22) the WPT transmission properties includes one or more of controlling individual phases of the radiated sinusoidal or multi-tone output signals of the plurality of WPT transmission devices (2a, ..., 2k; 9a, ..., 9n), controlling timing of the transmission during on/off time in duty-cycle operation of the plurality of WPT transmission devices (2a, ..., 2k; 9a, ..., 9n), controlling frequency spacing for spread-spectrum emission of the plurality of WPT transmission devices (2a, ..., 2k; 9a, ..., 9n) and controlling variation of modulation schemes of the RF transmission of the plurality of WPT transmission devices (2a, ..., 2k; 9a, ..., 9n).

13. The method (M1; M2) of claim 8, wherein controlling (M13; M23) the WPT transmission properties of the plurality of WPT transmission devices (2a, ..., 2k; 9a, ..., 9n) includes adjusting a maximum power level threshold at the fixed position of the at least one WPT receiver device (3), the maximum power level threshold corresponding to a maximum power level allowed for the at least one WPT receiver device (3) depending on the received geolocation or ground position signal.

14. The method (M1; M2) of one of the claims 8 or 13, wherein the plurality of WPT transmission devices (2a, ..., 2k; 9a, ..., 9n) is configured to perform radiative radio frequency, RF, WPT; and/or
wherein the WPT transmission properties controlled by WPT transmit controller (1) include one or more of individual phases of the radiated sinusoidal or multi-tone output signals of the plurality of WPT transmission devices (2a, ..., 2k; 9a, ..., 9n), timing of the transmission during on/off time in duty-cycle operation of the plurality of WPT transmission devices (2a, ..., 2k; 9a, ..., 9n), frequency spacing for spread-spectrum emission of the plurality of WPT transmission devices (2a, ..., 2k; 9a, ..., 9n) and variation of modulation schemes of the RF transmission of the plurality of WPT transmission devices (2a, ..., 2k; 9a, ..., 9n).

15. An aircraft (A), comprising the system (10; 20) according to one of the claims 1 to 7.

16. The aircraft (A) of claim 15, wherein the at least one WPT receiver device (3) comprises a sensor of a wireless aircraft network.

## Patentansprüche

1. System (10; 20) zur drahtlosen Leistungsübertragung, WPT, das Folgendes umfasst:
mehrere WPT-Sendeeinrichtungen (2a, ..., 2k; 9a, ..., 9n) mit mindestens paarweise überlappender Leistungsübertragungsabdeckung;
mindestens eine WPT-Empfangseinrichtung (3), die konfiguriert ist, Leistung, die durch die mehreren WPT-Sendeeinrichtungen (2a, ..., 2k; 9a, ... 9n) gesendet wurde, drahtlos zu empfangen, wobei die mindestens eine WPT-Empfangseinrichtung (3) bei einer festen Position in Bezug auf die mehreren WPT-Sendeeinrichtungen (2a, ..., 2k; 9a, 9n) angeordnet ist;
eine WPT-Sendesteuereinheit (1), die mit den mehreren WPT-Sendeeinrichtungen (2a, ..., 2k; 9a, ..., 9n) gekoppelt ist und konfiguriert ist, WPT-Sendeeigenschaften der mehreren WPT-Sendeeinrichtungen (2a, ..., 2k; 9a, ..., 9n) derart zu steuern, dass ein Sendeleistungspegel von den mehreren WPT-Sendeeinrichtungen (2a, ..., 2k; 9a, ..., 9n),
der bei der festen Position der mindestens einen WPT-Empfangseinrichtung (3) empfangen wird, innerhalb eines vorgegebenen Leistungspegelbereichs liegt;
einen Weiterübertragungsempfänger (4), der konfiguriert ist, Informationen über den Sendeleistungspegel, der bei der festen Position der mindestens einen WPT-Empfangseinrichtung (3) empfangen wird, an die WPT-Sendesteuereinheit (1) weiterzuleiten; und
eine Geolokalisierungs- oder Bodenpositionsvorrichtung (7), die konfiguriert ist, ein Geolokalisierungs- oder Bodenpositionssignal, das einen geographischen Ort des Systems (10; 20) angibt, zu empfangen;
wobei die WPT-Sendesteuereinheit (1) konfiguriert ist, den vorgegebenen Leistungspegelbereich in Abhängigkeit von dem geographischen Ort des Systems (10; 20) anzupassen, und konfiguriert ist, die WPT-Sendeeigenschaften der mehreren WPT-Sendeeinrichtungen (2a, ..., 2k; 9a, ..., 9n) in Abhängigkeit von den durch den Weiterübertragungsempfänger (4) weitergeleiteten Informationen über den Sendeleistungspegel, der bei der festen Position der mindestens einen WPT-Empfangseinrichtung (3) empfangen wird, anzupassen.

2. System (10; 20) nach Anspruch 1, wobei ein Mindestleistungspegelschwellenwert des vorgegebenen Leistungspegelbereichs durch einen Mindestleistungspegel, der nötig ist, um die mindestens eine WPT-Empfangseinrichtung (3) ausreichend mit elektrischer Leistung zu versorgen, bestimmt ist; und/oder
wobei ein Höchstleistungspegelschwellenwert des vorgegebenen Leistungspegelbereichs durch einen Höchstleistungspegel, der durch die Leistungsversorgungsspezifikationen der mindestens einen WPT-Empfangseinrichtung (3) unterstützt wird, bestimmt ist.

3. System (10; 20) nach einem der Ansprüche 1 oder 2, wobei die mehreren WPT-Sendeeinrichtungen (2a, ..., 2k; 9a, ..., 9n) konfiguriert sind, Hochfrequenzstrahlungs-WPT, HF-Strahlungs-WPT, durchzuführen.

4. System (10; 20) nach einem der Ansprüche 1 bis 3, wobei der Weiterübertragungsempfänger (4) mit der WPT-Sendesteuereinheit (1) gekoppelt ist; konfiguriert ist, von der mindestens einen WPT-Empfangseinrichtung (3) ein Sendeleistungspegelanzeigesignal (F) zu empfangen, das den gemessenen oder den detektierten Empfangsleistungspegel bei der Position der mindestens einen WPT-Empfangseinrichtung (3) anzeigt; und
eine Empfangsantenne (4b) enthält, die konfiguriert ist, das Sendeleistungspegelanzeigesignal (F) von der mindestens einen WPT-Empfangseinrichtung (3) drahtlos zu empfangen.

5. System (10; 20) nach Anspruch 4, wobei die WPT-Sendesteuereinheit (1) konfiguriert ist, die WPT-Sendeeigenschaften der mehreren WPT-Sendeeinrichtungen (2a, ..., 2k; 9a, ..., 9n) auf der Grundlage des von der mindestens einen WPT-Empfangseinrichtung empfangenen Sendeleistungspegelanzeigesignals (F) (3) anzupassen; und/oder
wobei die WPT-Sendeeigenschaften, die durch die WPT-Sendesteuereinheit (1) gesteuert werden, individuelle Phasen der abgestrahlten sinusförmigen oder Mehrtonausgangssignale der mehreren WPT-Sendeeinrichtungen (2a, ..., 2k; 9a, ... 9n) und/oder eine Zeitplanung des Sendens während einer Ein/Aus-Zeit im Arbeitszyklusbetrieb der mehreren WPT-Sendeeinrichtungen (2a, ..., 2k; 9a, ..., 9n) und/oder einen Frequenzabstand zur Spreizspektrumabstrahlung der mehreren WPT-Sendeeinrichtungen (2a, ..., 2k; 9a, ..., 9n) und/oder eine Variation von Modulationsschemas des HF-Sendens der mehreren WPT-Sendeeinrichtungen (2a, ..., 2k; 9a, ..., 9n) enthalten.

6. System (10; 20) nach Anspruch 1, wobei die Geolokalisierungs- oder Bodenpositionsvorrichtung (7) einen Empfänger (7) eines globalen Navigationssatellitensystems, GNSS, umfasst, der an die WPT-Sendesteuereinheit (1) gekoppelt ist und konfiguriert ist, das Geolokalisierungs- oder Bodenpositionssignal, insbesondere ein Positionierungssignal eines GNSS (8), das den geographischen Ort des Systems (20) für WPT anzeigt, zu empfangen; und/oder
wobei die WPT-Sendesteuereinheit (1) konfiguriert ist, einen Höchstleistungspegelschwellenwert bei der festen Position der mindestens einen WPT-Empfangseinrichtung (3) anzupassen, wobei der Höchstleistungspegelschwellenwert einem Höchstleistungspegel, der für die mindestens eine WPT-Empfangseinrichtung (3) abhängig vom empfangenen Geolokalisierungs- oder Bodenpositionssignal zulässig ist, entspricht.

7. System (10; 20) nach Anspruch 6, wobei die mehreren WPT-Sendeeinrichtungen (2a, ..., 2k; 9a, ..., 9n) dazu konfiguriert sind, Hochfrequenzstrahlungs-WPT, HF-Strahlungs-WPT durchzuführen; und/oder
wobei die WPT-Sendeeigenschaften, die durch die WPT-Sendesteuereinheit (1) gesteuert werden, individuelle Phasen der abgestrahlten sinusförmigen oder Mehrtonausgangssignale der mehreren WPT-Sendeeinrichtungen (2a, ..., 2k; 9a, ..., 9n) und/oder eine Zeitplanung des Sendens während einer Ein/Aus-Zeit im Arbeitszyklusbetrieb der mehreren WPT-Sendeeinrichtungen (2a, ..., 2k; 9a, ..., 9n) und/oder einen Frequenzabstand zur Spreizspektrumabstrahlung der mehreren WPT-Sendeeinrichtungen (2a, ..., 2k; 9a, ..., 9n) und/oder eine Variation von Modulationsschemas des HF-Sendens der mehreren WPT-Sendeeinrichtungen (2a, ..., 2k; 9a, ..., 9n) enthalten.

8. Verfahren (M1; M2) zur drahtlosen Leistungsübertragung, WPT, zwischen mehreren WPT-Sendeeinrichtungen (2a, ..., 2k; 9a, ..., 9n) mit mindestens paarweise überlappender Leistungsübertragungsabdeckung und mindestens einer WPT-Empfangseinrichtung (3), die konfiguriert ist, durch die mehreren WPT-Sendeeinrichtungen (2a, ..., 2k; 9a, ..., 9n) übertragene Leistung drahtlos zu empfangen, wobei das Verfahren (M1; M2) Folgendes umfasst:
Anordnen (M11; M21) der mindestens einen WPT-Empfangseinrichtung (3) bei einer festen Position in Bezug auf die mehreren WPT-Sendeeinrichtungen (2a, ..., 2k; 9a, ..., 9n); und
Steuern (M12; M22) von WPT-Sendeeigenschaften der mehreren WPT-Sendeeinrichtungen (2a, ..., 2k; 9a, ..., 9n) durch eine WPT-Sendesteuereinheit (1) derart, dass ein Sendeleistungspegel von den mehreren WPT-Sendeeinrichtungen (2a, ..., 2k; 9a, ..., 9n) bei der festen Position der mindestens einen WPT-Empfangseinrichtung (3) innerhalb eines vorgegebenen Leistungspegelbereichs liegt;
Weiterleiten von Informationen über den Sendeleistungspegel, der bei der festen Position der mindestens einen WPT-Empfangseinrichtung (3) empfangen wird, durch einen Weiterübertragungsempfänger (4) an die WPT-Sendesteuereinheit (1);
Empfangen eines Geolokalisierungs- oder Bodenpositionssignals, das einen geographischen Ort des Systems (10; 20) anzeigt, durch eine Geolokalisierungs- oder Bodenpositionsvorrichtung (7);
Anpassen des vorgegebenen Leistungspegelbereichs in Abhängigkeit von dem geographischen Ort des Systems (10; 20) durch die WPT-Sendesteuereinheit (1), und
Anpassen der WPT-Sendeeigenschaften der mehreren WPT-Sendeeinrichtungen (2a, ..., 2k; 9a, ..., 9n) in Abhängigkeit von den durch den Weiterübertragungsempfänger (4) weitergeleiteten Informationen über den Sendeleistungspegel, der bei der festen Position der mindestens einen WPT-Empfangseinrichtung (3) empfangen wird.

9. Verfahren (M1; M2) nach Anspruch 8, wobei ein Mindestleistungspegelschwellenwert des vorgegebenen Leistungspegelbereichs durch einen Mindestleistungspegel, der nötig ist, um die mindestens eine WPT-Empfangseinrichtung (3) ausreichend mit elektrischer Leistung zu versorgen, bestimmt ist; und/oder
wobei ein Höchstleistungspegelschwellenwert des vorgegebenen Leistungspegelbereichs durch einen Höchstleistungspegel, der durch die Leistungsversorgungsspezifikationen der mindestens einen WPT-Empfangseinrichtung (3) unterstützt wird, bestimmt ist.

10. Verfahren (M1; M2) nach einem der Ansprüche 8 oder 9, wobei die mehreren WPT-Sendeeinrichtungen (2a, ..., 2k; 9a, ..., 9n) konfiguriert sind, Hochfrequenzstrahlungs-WPT, HF-Strahlungs-WPT durchzuführen; und/oder das ferner Folgendes umfasst:
Empfangen (M13; M23) eines Sendeleistungspegelanzeigesignals (F) von der mindestens einen WPT-Empfangseinrichtung (3), das den gemessenen oder den detektierten Empfangsleistungspegel bei der Position der mindestens einen WPT-Empfangseinrichtung (3) anzeigt, durch den Weiterübertragungsempfänger (4).

11. Verfahren (M1; M2) nach Anspruch 10, wobei das Empfangen (M13; M23) des Sendeleistungspegelanzeigesignals (F) von der mindestens einen WPT-Empfangseinrichtung (3) drahtlos durchgeführt wird; und/oder
wobei das Steuern (M12; M22) der WPT-Sendeeigenschaften der mehreren WPT-Sendeeinrichtungen (2a, ..., 2k; 9a, ..., 9n) das Anpassen der WPT-Sendeeigenschaften der mehreren WPT-Sendeeinrichtungen (2a, ..., 2k; 9a, ..., 9n) auf der Grundlage des empfangenen Sendeleistungspegelanzeigesignals (F) von der mindestens einen WPT-Empfangseinrichtung (3) enthält.

12. Verfahren (M1; M2) nach einem der Ansprüche 8 bis 10, wobei das Steuern (M12; M22) der WPT-Sendeeigenschaften das Steuern individueller Phasen der abgestrahlten sinusförmigen oder Mehrtonausgangssignale der mehreren WPT-Sendeeinrichtungen (2a, ..., 2k; 9a, ..., 9n) und/oder das Steuern der Zeitplanung des Sendens während einer Ein/Aus-Zeit im Arbeitszyklusbetrieb der mehreren WPT-Sendeeinrichtungen (2a, ..., 2k; 9a, ..., 9n) und/oder das Steuern des Frequenzabstands zur Spreizspektrumabstrahlung der mehreren WPT-Sendeeinrichtungen (2a, ..., 2k; 9a, ..., 9n) und/oder das Steuern einer Variation von Modulationsschemas des HF-Sendens der mehreren WPT-Sendeeinrichtungen (2a, ..., 2k; 9a, ..., 9n) enthält.

13. Verfahren (M1; M2) nach Anspruch 8, wobei das Steuern (M13; M23) der WPT-Sendeeigenschaften der mehreren WPT-Sendeeinrichtungen (2a, ..., 2k; 9a, ..., 9n) das Anpassen eines Höchstleistungspegelschwellenwerts bei der festen Position der mindestens einen WPT-Empfangseinrichtung (3) enthält, wobei der Höchstleistungspegelschwellenwert einem Höchstleistungspegel, der für die mindestens eine WPT-Empfangseinrichtung (3) in Abhängigkeit von dem empfangenen Geolokalisierungs- oder Bodenpositionssignal zulässig ist, entspricht.

14. Verfahren (M1; M2) nach einem der Ansprüche 8 oder 13, wobei die mehreren WPT-Sendeeinrichtungen (2a, ..., 2k; 9a, ..., 9n) konfiguriert sind, Hochfrequenzstrahlungs-WPT, HF-Strahlungs-WPT, durchzuführen; und/oder
wobei die WPT-Sendeeigenschaften, die durch die WPT-Sendesteuereinheit (1) gesteuert werden, individuelle Phasen der abgestrahlten sinusförmigen oder Mehrtonausgangssignale der mehreren WPT-Sendeeinrichtungen (2a, ..., 2k; 9a, ..., 9n) und/oder die Zeitplanung des Sendens während einer Ein/Aus-Zeit im Arbeitszyklusbetrieb der mehreren WPT-Sendeeinrichtungen (2a, ..., 2k; 9a, ..., 9n) und/oder einen Frequenzabstand zur Spreizspektrumabstrahlung der mehreren WPT-Sendeeinrichtungen (2a, ..., 2k; 9a, ..., 9n) und/oder eine Variation von Modulationsschemas des HF-Sendens der mehreren WPT-Sendeeinrichtungen (2a, ..., 2k; 9a, ..., 9n) enthalten.

15. Luftfahrzeug (A), das das System (10; 20) nach einem der Ansprüche 1 bis 7 umfasst.

16. Luftfahrzeug (A) nach Anspruch 15, wobei die mindestens eine WPT-Empfangseinrichtung (3) einen Sensor eines drahtlosen Luftfahrzeugnetzes umfasst.

## Revendications

1. Système (10 ; 20) pour le transfert d'énergie sans fil, WPT, comprenant :
une pluralité de dispositifs de transmission WPT (2a, ..., 2k ; 9a, ..., 9n) dont les couvertures de transmission d'énergie se chevauchent au moins deux à deux ;
au moins un dispositif récepteur WPT (3) configuré pour recevoir sans fil de l'énergie transmise par la pluralité de dispositifs de transmission WPT (2a, ..., 2k ; 9a, ..., 9n), l'au moins un dispositif récepteur WPT (3) étant agencé à une position fixe par rapport à la pluralité de dispositifs de transmission WPT (2a, ..., 2k ; 9a, ...,9n) ; un contrôleur d'émission WPT (1) couplé à la pluralité de dispositifs de transmission WPT (2a, ..., 2k ; 9a, ..., 9n) et configuré pour commander des propriétés de transmission WPT de la pluralité de dispositifs de transmission WPT (2a, ..., 2k ; 9a, ..., 9n) de sorte qu'un niveau de puissance d'émission depuis la pluralité de dispositifs de transmission WPT (2a, ..., 2k ; 9a, ..., 9n) reçu à la position fixe de l'au moins un dispositif récepteur WPT (3) s'inscrit dans une plage prédéterminée de niveaux de puissance ;
un récepteur de retransmission (4) configuré pour relayer, au contrôleur d'émission WPT (1), des informations sur le niveau de puissance d'émission reçu à la position fixe de l'au moins un dispositif récepteur WPT (3) ; et
un dispositif de géolocalisation ou de position au sol (7) configuré pour recevoir un signal de géolocalisation ou de position au sol indiquant une localisation géographique du système (10 ; 20) ;
dans lequel le contrôleur d'émission WPT (1) est configuré pour ajuster la plage prédéterminée de niveaux de puissance en fonction de la localisation géographique du système (10 ; 20), et configuré pour ajuster les propriétés de transmission WPT de la pluralité de dispositifs de transmission WPT (2a, ..., 2k ; 9a, ..., 9n) en fonction des informations, relayées par le récepteur de retransmission (4), concernant le niveau de puissance d'émission reçu à la position fixe de l'au moins un dispositif récepteur WPT (3).

2. Système (10 ; 20) selon la revendication 1, dans lequel un seuil minimal de niveau de puissance de la plage prédéterminée de niveaux de puissance est déterminé par un niveau minimal de puissance nécessaire pour alimenter suffisamment en énergie électrique l'au moins un dispositif récepteur WPT (3) ; et/ou
dans lequel un seuil maximal de niveau de puissance de la plage prédéterminée de niveaux de puissance est déterminé par un niveau maximal de puissance pris en charge par les spécifications d'alimentation électrique de l'au moins un dispositif récepteur WPT (3).

3. Système (10 ; 20) selon l'une des revendications 1 ou 2, dans lequel la pluralité de dispositifs de transmission WPT (2a, ..., 2k ; 9a, ..., 9n) est configurée pour réaliser un WPT radiatif par radiofréquence, RF.

4. Système (10 ; 20) selon l'une des revendications 1 à 3, dans lequel le récepteur de retransmission (4) est couplé au contrôleur d'émission WPT (1) ;
est configuré pour recevoir, depuis l'au moins un dispositif récepteur WPT (3), un signal d'indication de niveau de puissance d'émission (F), indiquant le niveau de puissance reçu mesuré ou détecté à la position de l'au moins un dispositif récepteur WPT (3) ; et
comporte une antenne de réception (4b) configurée pour recevoir sans fil le signal d'indication de niveau de puissance d'émission (F) depuis l'au moins un dispositif récepteur WPT (3).

5. Système (10 ; 20) selon la revendication 4, dans lequel le contrôleur d'émission WPT (1) est configuré pour ajuster les propriétés de transmission WPT de la pluralité de dispositifs de transmission WPT (2a, ..., 2k ; 9a, ..., 9n) sur la base du signal d'indication de niveau de puissance d'émission (F) reçu depuis l'au moins un dispositif récepteur WPT (3) ; et/ou
dans lequel les propriétés de transmission WPT commandées par le contrôleur d'émission WPT (1) comportent un ou plusieurs éléments dans le groupe constitué par des phases individuelles des signaux de sortie sinusoïdaux ou multitonaux rayonnés de la pluralité de dispositifs de transmission WPT (2a, ..., 2k ; 9a, ..., 9n), une caractéristique temporelle de la transmission pendant un temps de marche/arrêt lors d'un fonctionnement à rapport cyclique de la pluralité de dispositifs de transmission WPT (2a, ..., 2k ; 9a, ..., 9n), un espacement de fréquences pour une émission à étalement de spectre de la pluralité de dispositifs de transmission WPT (2a, ..., 2k ; 9a, ..., 9n) et une variation de schémas de modulation de la transmission RF de la pluralité de dispositifs de transmission WPT (2a, ..., 2k ; 9a, ..., 9n).

6. Système (10 ; 20) selon la revendication 1, dans lequel le dispositif de géolocalisation ou de position au sol (7) comprend un récepteur de système mondial de navigation par satellite, GNSS, (7) couplé au contrôleur d'émission WPT (1), et est configuré pour recevoir le signal de géolocalisation ou de position au sol, en particulier un signal de positionnement d'un GNSS (8) indiquant la localisation géographique du système (20) pour le WPT ; et/ou
dans lequel le contrôleur d'émission WPT (1) est configuré pour ajuster un seuil maximal de niveau de puissance à la position fixe de l'au moins un dispositif récepteur WPT (3), le seuil maximal de niveau de puissance correspondant à un niveau maximal de puissance autorisé pour l'au moins un dispositif récepteur WPT (3) en fonction du signal de géolocalisation ou de position au sol reçu.

7. Système (10 ; 20) selon la revendication 6, dans lequel la pluralité de dispositifs de transmission WPT (2a, ..., 2k ; 9a, ..., 9n) est configurée pour réaliser un WPT radiatif par radiofréquence, RF ; et/ou
dans lequel les propriétés de transmission WPT commandées par le contrôleur d'émission WPT (1) comportent un ou plusieurs éléments dans le groupe constitué par des phases individuelles des signaux de sortie sinusoïdaux ou multitonaux rayonnés de la pluralité de dispositifs de transmission WPT (2a, ..., 2k ; 9a, ..., 9n), une caractéristique temporelle de la transmission pendant un temps de marche/arrêt lors d'un fonctionnement à rapport cyclique de la pluralité de dispositifs de transmission WPT (2a, ..., 2k ; 9a, ..., 9n), un espacement de fréquences pour une émission à étalement de spectre de la pluralité de dispositifs de transmission WPT (2a, ..., 2k ; 9a, ..., 9n) et une variation de schémas de modulation de la transmission RF de la pluralité de dispositifs de transmission WPT (2a, ..., 2k ; 9a, ..., 9n).

8. Procédé (M1 ; M2) pour le transfert d'énergie sans fil, WPT, entre une pluralité de dispositifs de transmission WPT (2a, ..., 2k ; 9a, ..., 9n) dont les couvertures de transmission d'énergie se chevauchent au moins deux à deux et au moins un dispositif récepteur WPT (3) configuré pour recevoir sans fil de l'énergie transmise par la pluralité de dispositifs de transmission WPT (2a, ..., 2k ; 9a, ..., 9n), le procédé (M1 ; M2) comprenant :
l'agencement (M11 ; M21) de l'au moins un dispositif récepteur WPT (3) à une position fixe par rapport à la pluralité de dispositifs de transmission WPT (2a, ..., 2k ; 9a, ..., 9n) ; et
la commande (M12 ; M22), par un contrôleur d'émission WPT (1), de propriétés de transmission WPT de la pluralité de dispositifs de transmission WPT (2a, ..., 2k ; 9a, ..., 9n) de sorte qu'un niveau de puissance d'émission depuis la pluralité de dispositifs de transmission WPT (2a, ..., 2k ; 9a, ..., 9n) à la position fixe de l'au moins un dispositif récepteur WPT (3) s'inscrit dans une plage prédéterminée de niveaux de puissance ;
le relais, par un récepteur de retransmission (4), au contrôleur d'émission WPT (1), d'informations concernant le niveau de puissance d'émission reçu à la position fixe de l'au moins un dispositif récepteur WPT (3) ;
la réception, par un dispositif de géolocalisation ou de position au sol (7), d'un signal de géolocalisation ou de position au sol indiquant une localisation géographique du système (10 ; 20) ;
l'ajustement, par le contrôleur d'émission WPT (1), de la plage prédéterminée de niveaux de puissance en fonction de la localisation géographique du système (10 ; 20) et
l'ajustement des propriétés de transmission WPT de la pluralité de dispositifs de transmission WPT (2a, ..., 2k ; 9a, ..., 9n) en fonction des informations, relayées par le récepteur de retransmission (4), concernant le niveau de puissance d'émission reçu à la position fixe de l'au moins un dispositif récepteur WPT (3).

9. Procédé (M1 ; M2) selon la revendication 8, dans lequel un seuil minimal de niveau de puissance de la plage prédéterminée de niveaux de puissance est déterminé par un niveau minimal de puissance nécessaire pour alimenter suffisamment en énergie électrique l'au moins un dispositif récepteur WPT (3) ; et/ou
dans lequel un seuil maximal de niveau de puissance de la plage prédéterminée de niveaux de puissance est déterminé par un niveau maximal de puissance pris en charge par les spécifications d'alimentation électrique de l'au moins un dispositif récepteur WPT (3).

10. Procédé (M1 ; M2) selon l'une des revendications 8 ou 9, dans lequel la pluralité de dispositifs de transmission WPT (2a, ..., 2k ; 9a, ..., 9n) est configurée pour réaliser un WPT radiatif par radiofréquence, RF ; et/ou comprenant en outre :
la réception (M13 ; M23), par le récepteur de retransmission (4), depuis l'au moins un dispositif récepteur WPT (3), d'un signal d'indication de niveau de puissance d'émission (F) indiquant le niveau de puissance reçu mesuré ou détecté à la position de l'au moins un dispositif récepteur WPT (3).

11. Procédé (M1 ; M2) selon la revendication 10, dans lequel la réception (M13 ; M23) du signal d'indication de niveau de puissance d'émission (F) depuis l'au moins un dispositif récepteur WPT (3) est réalisée sans fil ; et/ou
dans lequel la commande (M12 ; M22) des propriétés de transmission WPT de la pluralité de dispositifs de transmission WPT (2a, ..., 2k ; 9a, ..., 9n) comporte l'ajustement des propriétés de transmission WPT de la pluralité de dispositifs de transmission WPT (2a, ..., 2k ; 9a, ..., 9n) sur la base du signal d'indication de niveau de puissance d'émission (F) reçu depuis l'au moins un dispositif récepteur WPT (3).

12. Procédé (M1 ; M2) selon l'une des revendications 8 à 10, dans lequel la commande (M12 ; M22) des propriétés de transmission WPT comporte un ou plusieurs éléments dans le groupe constitué par la commande de phases individuelles des signaux de sortie sinusoïdaux ou multitonaux rayonnés de la pluralité de dispositifs de transmission WPT (2a, ..., 2k ; 9a, ..., 9n), la commande d'une caractéristique temporelle de la transmission pendant un temps de marche/arrêt lors d'un fonctionnement à rapport cyclique de la pluralité de dispositifs de transmission WPT (2a, ..., 2k ; 9a, ..., 9n), la commande d'un espacement de fréquences pour une émission à étalement de spectre de la pluralité de dispositifs de transmission WPT (2a, ..., 2k ; 9a, ..., 9n) et la commande d'une variation de schémas de modulation de la transmission RF de la pluralité de dispositifs de transmission WPT (2a, ..., 2k ; 9a, ..., 9n).

13. Procédé (M1 ; M2) selon la revendication 8, dans lequel la commande (M13 ; M23) des propriétés de transmission WPT de la pluralité de dispositifs de transmission WPT (2a, ..., 2k ; 9a, ..., 9n) comporte l'ajustement d'un seuil maximal de niveau de puissance à la position fixe de l'au moins un dispositif récepteur WPT (3), le seuil maximal de niveau de puissance correspondant à un niveau maximal de puissance autorisé pour l'au moins un dispositif récepteur WPT (3) en fonction du signal de géolocalisation ou de position au sol reçu.

14. Procédé (M1 ; M2) selon l'une des revendications 8 ou 13, dans lequel la pluralité de dispositifs de transmission WPT (2a, ..., 2k ; 9a, ..., 9n) est configurée pour réaliser un WPT radiatif par radiofréquence, RF ; et/ou
dans lequel les propriétés de transmission WPT commandées par le contrôleur d'émission WPT (1) comportent un ou plusieurs éléments dans le groupe constitué par des phases individuelles des signaux de sortie sinusoïdaux ou multitonaux rayonnés de la pluralité de dispositifs de transmission WPT (2a, ..., 2k ; 9a, ..., 9n), une caractéristique temporelle de la transmission pendant un temps de marche/arrêt lors d'un fonctionnement à rapport cyclique de la pluralité de dispositifs de transmission WPT (2a, ..., 2k ; 9a, ..., 9n), un espacement de fréquences pour une émission à étalement de spectre de la pluralité de dispositifs de transmission WPT (2a, ..., 2k ; 9a, ..., 9n) et une variation de schémas de modulation de la transmission RF de la pluralité de dispositifs de transmission WPT (2a, ..., 2k ; 9a, ..., 9n).

15. Aéronef (A), comprenant le système (10 ; 20) selon l'une des revendications 1 à 7.

16. Aéronef (A) selon la revendication 15, dans lequel l'au moins un dispositif récepteur WPT (3) comprend un capteur d'un réseau sans fil d'aéronef.
